# EUROPEAN PATENT SPECIFICATION

(11) **EP 2 639 163 B1**
(45) Date of publication and mention of the grant of the patent: **10.09.2014**
(21) Application number: 12380013.8
(22) Date of filing: 15.03.2012
(51) Int. Cl.: B65B 3/32, A23G 3/20

(54) **Method and apparatus for generating a filling pattern for filling containers**
Verfahren und Vorrichtung zur Erzeugung eines Füllmusters zum Füllen von Behältern
Procédé et appareil de génération d' un motif de remplissage pour remplir des récipients

(43) Date of publication of application: 18.09.2013
(73) Proprietor: Antonio Mengibar, S.A., 08191 Rubi ( Barcelona) (ES)
(72) Inventor: Mengibar Rivas, Antonio, 08290 Cerdanyola del Valles Barcelona (ES)
(74) Representative: Carvajal y Urquijo, Isabel

(56) References cited:
- EP-A1- 1 602 579
- EP-A1- 2 204 322
- EP-A2- 1 842 773
- EP-A2- 2 177 109
- US-A- 3 559 700

## Description

### Object of the Invention

The present invention relates to a method and an apparatus which allows generating an unlimited number of filling patterns for filling containers, said containers being of the type containing therein a product made up of a plurality of independent compositions which are combined during the packaging thereof.

The present invention has been particularly designed for application in the packaging industry in general, being particularly ideal for packaging cosmetic, food, pharmaceutical products or other home cleaning products, among others.

### Background of the Invention

Packaging industry constantly develops towards obtaining more efficient packaging processes which are more environmental friendly and offer a greater degree of care and conservation of the products to be packaged. Said development has experienced in recent years, spurred particularly by cosmetic sector, a clear trend towards obtaining new forms of presentation in which both the external design of the container itself and the arrangement of the product contained therein are combined, the last aspect being directly directed to filling technologies (machinery and processes).

The new forms of presentation provide many advantages to the packaged products both at the aesthetic and functional level. The advantages at aesthetic level are particularly relevant, making said products more commercially attractive in an increasingly demanding and selective market. The advantages at functional level mainly relate to a suitable way of using the product, allowing the different compositions forming the product to be conveniently mixed to optimally achieve the effect expected therefrom.

Container design and filling technologies progress hand-in-hand in search of these new forms of presentation. Nevertheless, although said progress of container design seems to be unlimited, the existing filling technologies still have significant technical limitations.

In this sense, methods and apparatuses are known (e.g. EP 1 602 579) which allow filling a container with two or more compositions that tend to have different physical and chemical properties, forming a product therein normally having a helical filling pattern of constant radius. Therefore, said product shows a circular shape in a horizontal plane which corresponds to a spiral of constant section formed by the different compositions, along a vertical axis perpendicular to the horizontal plane. The methods generating filling patterns of this type generally comprise; distributing the flow rate of each composition towards a filling head having an output nozzle oriented towards the mouth of a container, rotating the container about a vertical axis thereof and varying the relative distance between the container and the nozzle in the direction of said vertical axis. The filling head is generally arranged in a support column parallel to the vertical axis, said head being able to slide along same. The container is in turn arranged on a rotary support base, said container being able to rotate about the vertical axis.

EP 2 177 109 uses non-rotating nozzles or cup-holders.

The filling patterns offered by this technology are very limited and are virtually restricted to obtaining simple helical shapes of constant section.

The present invention relates to a method and an apparatus which allow generating an unlimited number of filling patterns which encompasses all types of shapes and combinations thereof, including: simple shapes, complex shapes, symmetrical shapes, asymmetrical shapes, continuous shapes, discontinuous shapes, shapes of constant section, shapes of variable section, regular shapes, irregular shapes, etc. substantially boosting the commercial attractiveness of the packaged products obtained.

### Description of the Invention

The present invention relates to a method and an apparatus which solve the aforementioned problems, being able to generate a large variety of filling patterns for efficiently filling containers.

The containers in question are of the type containing therein a product made up of a plurality of independent compositions supplied separately which are combined during the packaging thereof. Specifically, the compositions are combined during the filling phase, being able to simply be in contact or being able to be partially or completely mixed. Generally, each composition, although not necessarily so, tends to have different physical and chemical properties, each of them having a specific use and function in product administration by the user, for example; shampoo and conditioner, active composition and excipient, etc. Furthermore, said compositions tend to adopt different colors and textures which are clearly visually distinguishable, the combination of which inside a transparent or translucent container offers a form of presentation of the packaged product with a determined degree of aesthetic attractiveness.

According to a first object thereof the present invention relates to a method for generating filling patterns for filling containers comprising the steps of:
- regulating the flow rate of each composition;
- distributing the flow rate of each composition towards a filling head having an output nozzle which is configured for metering each composition, said nozzle is oriented towards the mouth of a container;
- rotating the container about a vertical axis thereof; and
- varying the relative distance between the container and the nozzle in the direction of the vertical axis.

Additionally the method comprises the steps of:
- varying the relative distance between the container and the output nozzle in a horizontal plane perpendicular to the vertical axis; and
- filling the container, controlling the flow rate of each composition, the rotation of the container and the variation of the relative vertical and horizontal distances between the container and the nozzle for generating a filling pattern for filling the product in the container.

The variation of the relative vertical distance between the container and the output nozzle preferably comprises the step of moving the container in the direction of the vertical axis, it being much more effective than moving the entire filling head along a support column thereof.

On the other hand, the variation of the relative horizontal distance between the container and the output nozzle has two options of special interest. The first of which comprises the step of moving the filling head in the horizontal plane, whereas the second comprises the step of moving the container in the horizontal plane.

An unlimited number of filling patterns for filling the product contained in the container offering a very attractive appearance to the packaged product can be obtained by means of the described method. The designer of the container therefore has a tool allowing him/her to combine any type of shape; simple shapes, complex shapes, symmetrical shapes, asymmetrical shapes, continuous shapes, discontinuous shapes, shapes of constant section, shapes of variable section, regular shapes, irregular shapes, etc., which are associated with a plurality of compositions having different shades, colors or textures. Therefore, according to a first example, a filling pattern with a spiral shape of variable diameter having a first composition along the container embedded in a second composition can be obtained. According to a second example, a filling pattern divided into at least two parts having a first composition embedded in a second composition can be obtained. In other words, geometric shapes and figures of any type, and even drawings and texts can be configured with this method.

According to a second object thereof the present invention relates to an apparatus for generating filling patterns for filling containers comprising:
- a measuring unit for measuring each composition, configured for regulating the flow rate thereof;
- a filling head having an output nozzle which is configured for metering each composition and which is oriented towards the mouth of a container;
- a distribution conduit for distributing each composition, configured for distributing the flow rate from the measuring unit to the filling head;
- rotating means configured for rotating the container about a vertical axis thereof; and
- vertical displacement means configured for varying the relative distance between the container and the nozzle in the direction of the vertical axis.

The apparatus additionally comprises:
- horizontal displacement means configured for varying the relative distance between the container and the output nozzle in a horizontal plane perpendicular to the vertical axis; and
- control means for controlling the filling of the container configured for controlling the flow rate of each composition, the rotation of the container and the variation of the relative vertical and horizontal distances between the container and the nozzle, for generating a filling pattern for filling the product in the container.

The measuring units are responsible for measuring the amount of each composition to be filled at each instant or time of the process. The most common measuring units are those using metering cylinders or other positive displacement metering pumps (peristaltic pumps, gear pumps, etc.) and those using flowmeters. The first measure the flow rate by calculating the volume displaced by said positive displacement pumps, for example, by knowing the displacement of a plunger inside a metering cylinder the volume displaced by it is also known. In these cases, the flow rate regulation is regulated by regulating the speed of the corresponding positive displacement pump. The second use flowmeters for measuring flow rate, whereas the flow rate is regulated by means of proportional valves. To increase the precision closed loop controls are usually applied between the flowmeter and the opening or closing of the proportional valve.

The distribution conduit preferably comprises flexible connections connecting the measuring unit and the filling head to allow moving the filling head in the horizontal plane.

The rotating means preferably comprise:
- a frame on which there is arranged one or more containers, each vertically aligned with a filling head and arranged on a rotary support base coupled to a gear train; and
- a rotation mechanism meshing with the gear train to transmit a controlled rotational movement to the support base.

The vertical displacement means preferably comprise:
- at least one extendable bar parallel to the vertical axis with an upper end attached to the frame;
- a vertical displacement mechanism elongating or shortening the length of the extendable bar to transmit a controlled movement of the container in the direction of the vertical axis.

The extendable bar can adopt different configurations which allow elongating or shortening the length thereof in a controlled manner. According to a preferred embodiment; the bar has a dual body formed by a cylindrical casing and a screw threaded axially to same, the upper end of said casing being attached to the frame and said screw receiving a controlled rotational movement. Since the screw is a fixed screw, its clockwise or anti-clockwise rotation causes the linear ascending or descending movement of the casing which is eventually transmitted to the frame.

The horizontal displacement means preferably comprise:
- a first screw parallel to the Y axis of the horizontal plane;
- a first transfer carriage traversed by the first screw which can be moved along same, the movement of which is transmitted to the filling head; and
- a first horizontal displacement mechanism configured for rotating the first screw and for producing a controlled movement of the transfer carriage along said first screw.

Likewise, the first transfer carriage is preferably attached to the filling heads available in the filling machine by means of an attachment bar which allows the fixing thereof to one or more filling heads.

The horizontal displacement means in turn comprise:
- a second screw parallel to the X axis of the horizontal plane;
- a second transfer carriage traversed by the second screw which can be moved along same, the movement of which is transmitted to the filling head; and
- a second horizontal displacement mechanism configured for rotating the second screw and for producing a controlled movement of the second transfer carriage along said second screw.

The controlled movement of the first and the second transfer carriage allows positioning the filling head at any point of the horizontal plane. This allows obtaining any type of path, either curved or rectilinear, on the horizontal plane.

To assure the stiffness of the horizontal displacement means these can additionally comprise:
- a third screw horizontally parallel to the second screw;
- a third transfer carriage traversed by the third screw which can be moved along same, the movement of which is transmitted to the filling head; and
- a third horizontal displacement mechanism configured for rotating the third screw and for producing the controlled movement of the third transfer carriage in a synchronized manner with the movement of the second carriage.

One of the possible ways for the movement of the different transfer carriages to eventually be transmitted to the filling head consists of attaching the first screw to the second and/or the third transfer carriage, such that said first screw can move due to the action exerted by said second and/or third transfer carriage. In other words, the movement of the first carriage is directly transmitted to the filling head, whereas the movement of the second and of the third carriage is indirectly transmitted to the filling head by means of the first screw.

This preferred solution of the horizontal displacement means allows many possible constructive combinations, different points for fixing the screws, different ways of attaching same, the possibility of replacing any transfer carriage with linear servomotors, etc. However, the variation of the horizontal distance between the container and the output nozzle in a horizontal plane perpendicular to the vertical axis allows other substantially different solutions. One of them can be by means of integrating one of or both the horizontal displacement movements in the vertical displacement means, for example, allowing the frame to move in the direction of one of or both the axes X and Y of a horizontal plane.

The rotation of the container and the variation of the relative vertical and horizontal distances between the container and the nozzle are carried out in a controlled manner, knowing the angle of rotation of the container and the relative vertical and horizontal distances between the container and the nozzle at all times. To that end, rotation, vertical displacement and horizontal displacement mechanisms formed by servomotors capable of being controlled both in terms of speed and position are preferably used.

The control means of the apparatus of the present invention comprise all automatic controls, operation data display and input devices, processing software and hardware necessary for the correct execution and operation of the method and apparatus of the present invention.

The apparatus of the present invention allows performing the different movements; rotation of the container, vertical displacement (Z) and horizontal displacement (X and Y) in a simultaneous or alternate manner. In other words, depending on the complexity of the filling pattern any of the following groups of movements can be provided for obtaining it:
a) rotation + horizontal displacement (X or Y);
b) rotation + horizontal displacement X + horizontal displacement Y;
c) vertical displacement Z + horizontal displacement (X or Y);
d) vertical displacement Z+ horizontal displacement X + horizontal displacement Y;
e) rotation + vertical displacement Z+ horizontal displacement (X or Y); and
f) rotation + vertical displacement Z + horizontal displacement X + horizontal displacement Y.

### Brief Description of the Drawings

A set of drawings which aids to better understand the invention and which expressly relates to a preferred embodiment of said invention presented as an nonlimiting example thereof is described briefly below.
Figure 1 depicts a perspective view of the apparatus of the present invention.
Figure 2 depicts an elevational view of Figure 1.
Figure 3 depicts a side view of Figure 1.
Figure 4 depicts a plan view of Figure 1.
Figure 5A depicts a schematic front view of the generation of a first example of filling pattern.
Figure 5B depicts a cross-section view of Figure 5A according to cut line A-A.
Figure 5C depicts a side view of a container showing the result of applying the first example of filling pattern.
Figure 5D depicts a perspective view of the container of Figure 5C.
Figure 6A depicts a schematic front view of the generation of a second example of filling pattern.
Figure 6B depicts a cross-section view of Figure 6A according to cut line B-B.
Figure 6C depicts a side view of a container showing the result of applying the second example of filling pattern.
Figure 6D depicts a perspective view of the container of Figure 6C.

### Preferred Embodiment of the invention

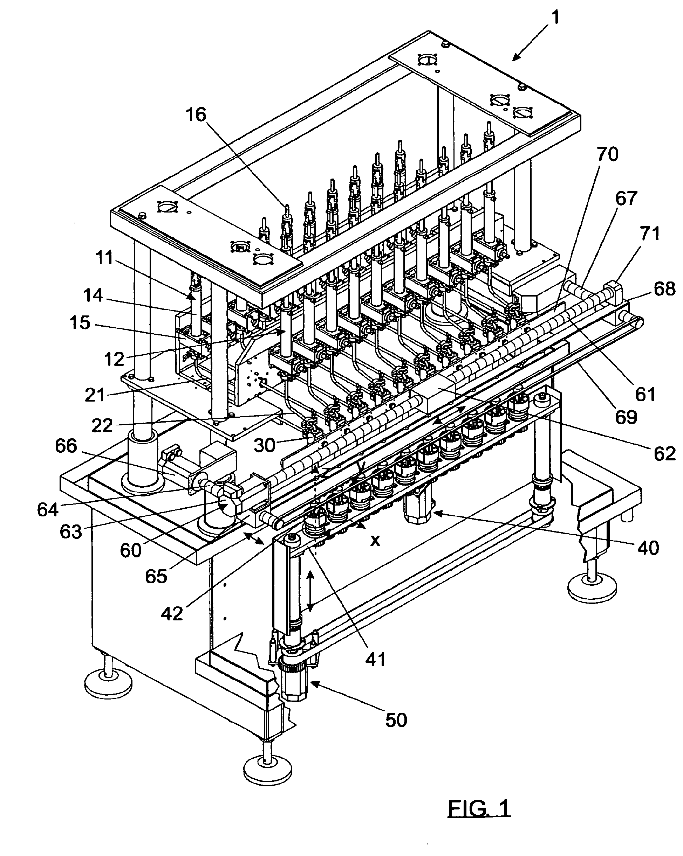

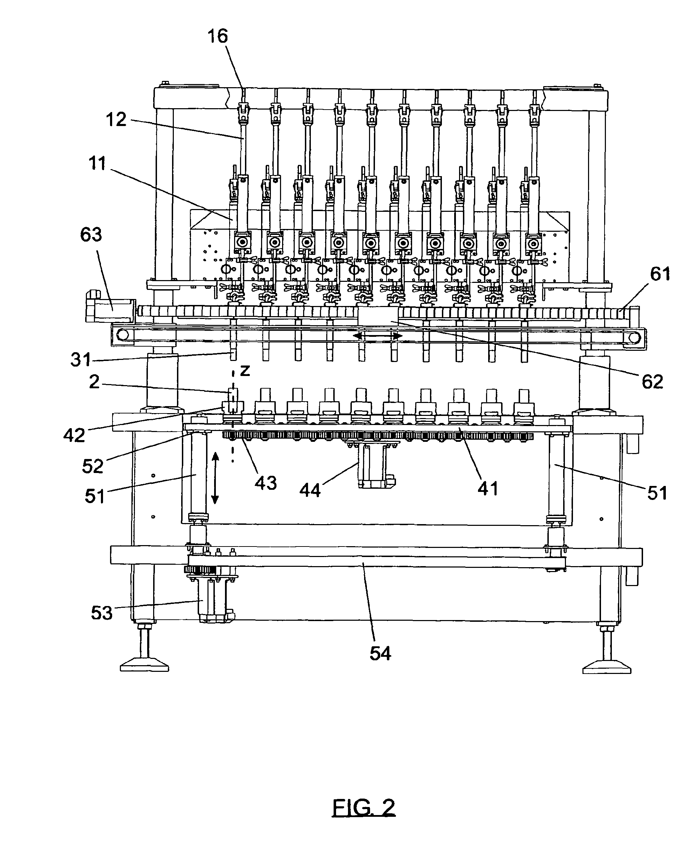

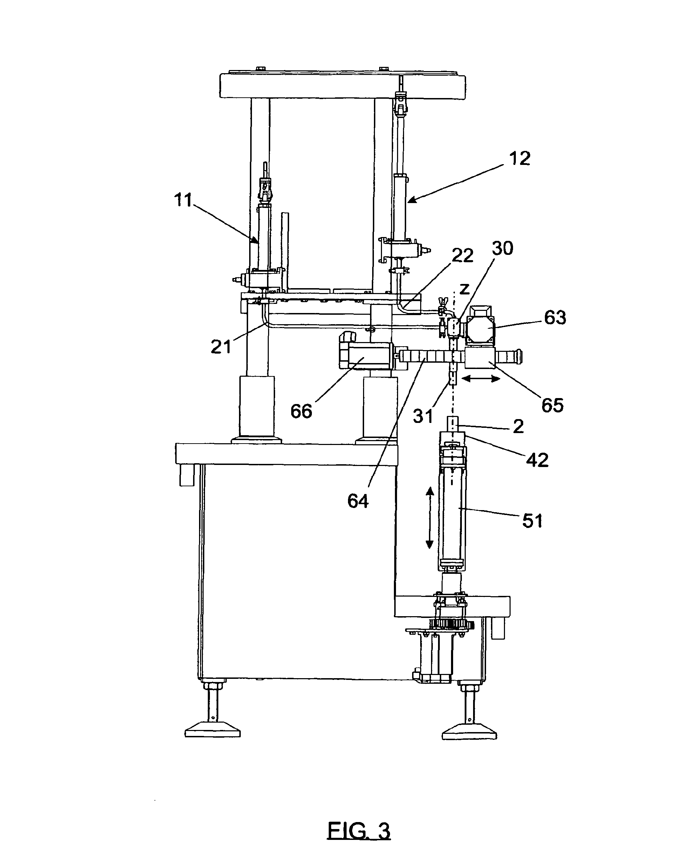

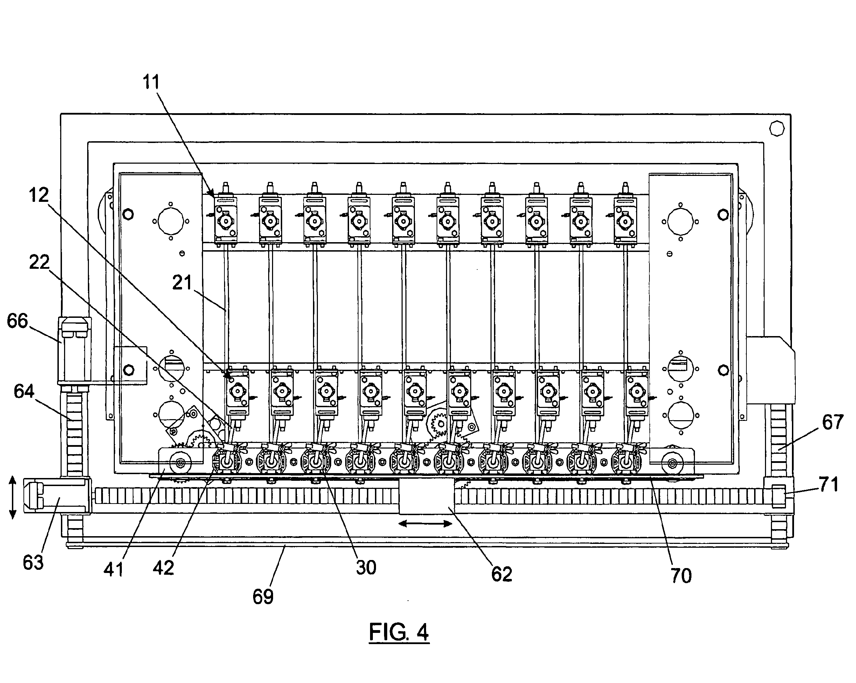

Figures 1 to 4 show different views of the apparatus of the present invention according to a preferred embodiment thereof, in which it can be seen that the apparatus (1) for generating filling patterns for filling containers (2) comprises:
- a measuring unit (11, 12) for measuring each composition (10, 20), configured for regulating the flow rate thereof;
- a filling head (30) having an output nozzle (31) which is configured for metering each composition (10, 20) and which is oriented towards the mouth of a container (2);
- a distribution conduit (21, 22) for distributing each composition (10, 20), configured for distributing the flow rate from the measuring unit (11, 12) to the filling head (30);
- rotating means (40) configured for rotating the container (2) about a vertical axis (Z) thereof; and
- vertical displacement means (50) configured for varying the relative distance between the container (2) and the nozzle (31) in the direction of the vertical axis (Z).

The apparatus (1) additionally comprises:
- horizontal displacement means (60) configured for varying the relative distance between the container (2) and the output nozzle (31) in a horizontal plane (XY) perpendicular to the vertical axis (Z), which according to the present example has X and Y orthogonal coordinate axes; and
- control means, not depicted, for controlling the filling of the container (2) configured for controlling the flow rate of each composition (10, 20) during the filling process, the rotation of the container (2) and the variation of the relative vertical and horizontal distances between the container (2) and the nozzle (31) for generating a filling pattern (100) for filling the product (1) in the container (2).

The present example shows an apparatus (1) formed by ten filling columns,' each of which with two different compositions (10, 20). In this sense the configurations which can be adopted by the apparatus of the present invention are unlimited, being able to adopt one or more filling columns, each of them having two or more different compositions.

The measuring units (11, 12) depicted show metering cylinders (14) with three-way valves (15) enabling the communication between a supply conduit (16) for supplying a composition (10, 20), the metering cylinder (14) and the distribution conduit (11, 12) with the filling head (30). The distribution conduit (11, 12) comprises flexible connections between the measuring unit (11, 12) and the filling head (30) to allow moving the filling head (30) in a horizontal plane (XY).

The rotating means (40) comprise:
- a frame (41) on which there are arranged the containers (2), each of them vertically aligned with a filling head (30) and arranged on a rotary support base (42) coupled to a gear train (43); and
- a rotation mechanism (44) meshing with the gear train (43) to transmit a controlled rotational movement to the support bases (42).

The vertical displacement means (50) comprise:
- two extendable bars (51) parallel to the vertical axis (Z) with an upper end (52) attached to the frame (41);
- a vertical displacement mechanism (53) elongating or shortening the length of the extendable bars (51) to transmit a controlled movement of the container (2) in the direction of the vertical axis (Z).

According to the present example the extendable bars (51) comprise a cylindrical casing and a screw threaded axially to same, not depicted in the drawings. The upper end (52) of each casing is attached to the frame (41). Orie of the screws receives a direct rotational movement controlled by the vertical displacement mechanism (53). Said rotational movement is transferred to another screw by means of a transfer belt (54).

The horizontal displacement means (60) comprise:
- a first screw (61) parallel to the Y axis of the horizontal plane (XY);
- a first transfer carriage (62) traversed by the first screw (61) which can be moved along same, the movement of which is transmitted to the filling heads (30); and
- a first horizontal displacement mechanism (63) configured for rotating the first screw (61) and for producing a controlled movement of the transfer carriage (62) along said first screw (61).

The horizontal displacement means (60) in turn comprise:
- a second screw (64) parallel to the X axis of the horizontal plane (XY);
- a second transfer carriage (65) traversed by the second screw (64) which can be moved along same, the movement of which is transmitted to the filling heads (30); and
- a second horizontal displacement mechanism (66) configured for rotating the second screw (64) and for producing a controlled movement of the second transfer carriage (65) along said second screw (64).

To assure the stiffness of the horizontal displacement means (60) these additionally comprise:
- a third screw (67) horizontally parallel to the second screw (64);
- a third transfer carriage (68) traversed by the third screw (67) which can be moved along same, the movement of which is transmitted to the filling heads (30); and
- a third horizontal displacement mechanism (69) configured for rotating the third screw (64) and for producing the controlled movement of the third carriage (68), in a synchronized manner with the movement of the second carriage (65).

As can be seen in the present example, the third horizontal displacement mechanism (69) is formed by a transmission belt configured to transmit the rotation of the second screw (64) to the third screw (67). According to other particular embodiments not depicted, the second (64) and the third screw (67) can each have their own motor, both motors working in a synchronized manner, or they can have a single external motor acting on a transmission chain connecting with both screws (64, 67).

The transfer carriages (62, 65, 68) are traversed by the corresponding screws (61, 64, 67) by means of threading which links the rotational movement of each screw (61, 64, 67) to a linear movement of each carriage (62, 65, 68) along the screw (61, 64, 67) traversing it.

Likewise, the linear movement of the carriages (62, 65, 68) is transmitted to the filling heads (30) in the following manner. The first transfer carriage (62) is attached to the filling heads (30) by means of an attachment bar (70). The movement is directly transmitted to the filling heads (30).

The first screw (61) is in turn attached to the second (65) and to the third transfer carriage (67) such that said first screw (61) can move due to the action exerted thereon by said second (65) and third transfer carriage (67). This attachment is made by arranging the first horizontal displacement mechanism (63) on the second transfer carriage (65), and a securing stop (71) of the end of the first screw (61) on the third transfer carriage (67). The movement is indirectly transmitted to the filling heads (30).

This example shows how the second (64) and the third screw (67) are anchored to fixed points of the filling machine, whereas the first screw (61) is in a floating arrangement thereon.

The two-way arrows of Figures 1 to 4 reflect the direction of displacement of the elements to which they refer.

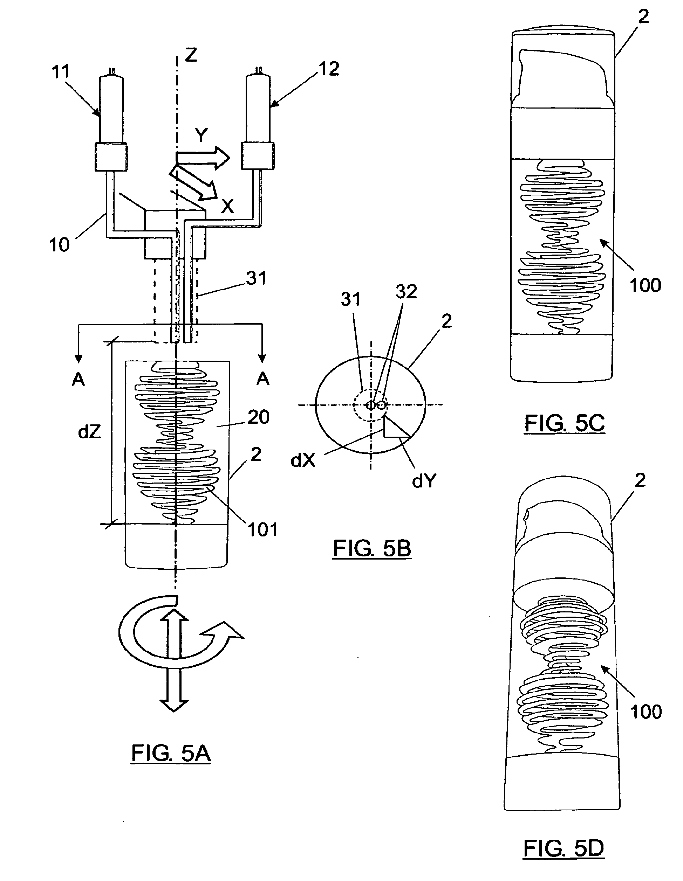

Figure 5A shows a schematic front view of the generation of a first example of filling pattern (100). All the movements involved in the generation thereof have been depicted by means of one-way arrows. According to this first example, the filling pattern (100) with a spiral shape of variable diameter (101) has a first composition (10) along the container (2) embedded in a second composition (20).

The relative vertical distance (dZ) between the container (2) and the nozzle (31) in the direction of the vertical axis (Z) varies from the bottom of the container (2) to beyond its mouth, according to the dimension depicted in said figure.

It can be seen in Figure 5B that the relative horizontal distance (dX, dY) between the container (2) and the output nozzle (31) varies from the inner contour of the container (2) to the outer contour of the nozzle (31). The holes (32) through which each composition (10, 20) is administered can be seen in the cross-section of the nozzle (31).

Figures 5C and 5D respectively show a side view and a perspective view of the result obtained by means of this first example of filling pattern (100).

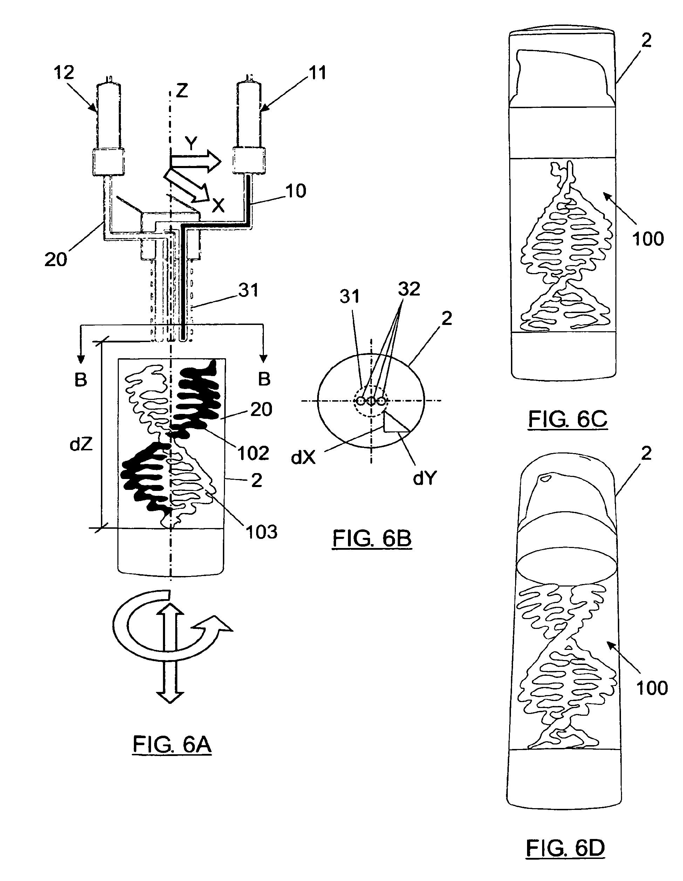

Figure 6A shows a schematic front view of the generation of a second example of filling pattern (100). All the movements involved in the generation thereof have been depicted by means of one-way arrows. According to this second example, the filling pattern (100) divided into at least two parts (102, 103) has a first composition (10) embedded in a second composition (20).

The relative vertical distance (dZ) between the container (2) and the nozzle (31) in the direction of the vertical axis (Z) varies from the bottom of the container (2) to beyond its mouth, according to the dimension depicted in said figure.

It can be seen in Figure 6B that the relative horizontal distance (dX, dY) between the container (2) and the output nozzle (31) varies from the inner contour of the container (2) to the outer contour of the nozzle (31). The holes (32) through which each composition (10, 20) is administered can be seen in the cross-section of the nozzle (31). The first composition (10) is administered through the two side holes (32).

Figures 6C and 6D respectively show a side view and a perspective view of the result obtained by means of this second example of filling pattern (100).

The apparatus (1) of the present example is particularly designed for integration in production lines, in which the containers (2) are supplied in an automatic or semi-automatic manner, and are also transferred in an automatic or semi-automatic manner once the filling process ends to continue with the packaging process (capping, labeling, palletizing, etc.).

According to these examples, the method for generating filling patterns for filling containers comprises the steps of:
- regulating the filling flow rate of the compositions (10, 20);
- distributing the flow rate of each composition (10, 20) towards the filling head (30) having an output nozzle (31) which is configured for metering each composition (10, 20), said nozzle (31) oriented towards the mouth of the container (2);
- rotating the container (2) about a vertical axis (Z) thereof; and
- varying the relative distance (dZ) between the container (2) and the nozzle (31) in the direction of the vertical axis (Z).

The method additionally comprises the steps of:
- varying the relative distance (dX, dY) between the container (2) and the output nozzle (31) in a horizontal plane (XY) perpendicular to the vertical axis (Z); and
- filling the container (2), controlling the filling flow rate of each composition (10, 20), the rotation of the container (2) and the variation of the relative vertical and horizontal distances between the container (2) and the nozzle (31) for generating a filling pattern (100) for filling the product (1) in the container (2).

The variation of the relative vertical distance (dZ) between the container (2) and the output nozzle (31) comprises the step of moving the container (2) in the direction of the vertical axis (Z).

The variation of the relative horizontal distance (dX, dY) between the container (2) and the output nozzle (31) comprises the step of moving the filling head (30) in the horizontal plane (XY).

## Claims

1. A method for generating a filling pattern for filling a product in a container, said product (1) is formed by a plurality of compositions (10, 20) supplied separately, wherein said method comprises the steps of:
• regulating the flow rate of each composition (10, 20);
• distributing each composition (10, 20) at a given flow rate towards a filling head (30) having an output nozzle (31) which is configured for metering each composition (10, 20), said nozzle (31) is oriented towards the mouth of a container (2);
• rotating the container (2) about a vertical axis (Z) thereof; and
• varying the relative distance between the container (2) and the nozzle (31) in the direction of the vertical axis (Z);
said method **characterized in that** it additionally comprises the steps of:
• varying the relative distance between the container (2) and the output nozzle (31) in a horizontal plane (XY) perpendicular to the vertical axis (Z); and
• filling the container (2), controlling the flow rate of each composition (10, 20), the angle of rotation of the container (2) and the relative vertical and horizontal distances between the container (2) and the nozzle (31), for generating a filling pattern (100) for filling the product (1) in the container (2).

2. The method for generating a filling pattern for filling a product in a container according to claim 1, **characterized in that** the variation of the relative vertical distance between the container (2) and the output nozzle (31) comprises the step of:
• moving the container (2) in the direction of the vertical axis (Z).

3. The method for generating a filling pattern for filling a product in a container according to any of claims 1 to 2, **characterized in that** the variation of the relative horizontal distance between the container (2) and the output nozzle (31) comprises the step of:
• moving the filling head (30) in the horizontal plane (XY).

4. The method for generating a filling pattern for filling a product in a container according to any of claims 1 to 2, **characterized in that** the variation of the relative horizontal distance between the container (2) and the output nozzle (31) comprises the step of:
• moving the container (2) in the horizontal plane (XY).

5. The method for generating a filling pattern for filling a product in a container according to any of claims 1 to 4, **characterized in that** the filling pattern (100) with a spiral shape of variable diameter (101) has a first composition (10) embedded in a second composition (20).

6. The method for generating a filling pattern for filling a product in a container according to any of claims 1 to 5, **characterized in that** the filling pattern (100) divided into at least two parts (102, 103) has a first composition (10) embedded in a second composition (20).

7. An apparatus for generating a filling pattern for filling a product in a container, said product (1) is formed by a plurality of compositions (10, 20) supplied separately, wherein said apparatus comprises:
• a measuring unit (11, 12) for measuring each composition (10, 20), configured for regulating the flow rate thereof;
• a filling head (30) having an output nozzle (31) which is configured for metering each composition (10, 20) and which is oriented towards the mouth of a container (2);
• a distribution conduit (21, 22) configured for distributing each composition (10, 20) at a given flow rate from the measuring unit (11, 12) to the filling head (30);
• rotating means (40) configured for rotating the container (2) about a vertical axis (Z) thereof; and
• vertical displacement means (50) configured for varying the relative distance between the container (2) and the nozzle (31) in the direction of the vertical axis (Z);
said apparatus **characterized in that** it additionally comprises:
• horizontal displacement means (60) configured for varying the relative distance between the container (2) and the output nozzle (31) in a horizontal plane (XY) perpendicular to the vertical axis (Z); and
• control means for controlling the filling of the container (2) configured for controlling the flow rate of each composition (10, 20), the angle of rotation of the container (2) and the relative vertical and horizontal distances between the container (2) and the nozzle (31), for generating a filling pattern (100) for filling the product (1) in the container (2).

8. The apparatus for generating a filling pattern for filling a product in a container according to claim 7, **characterized in that** the distribution conduit (21, 22) comprises flexible connections connecting the measuring unit (11, 12) and the filling head (30) to allow moving the filling head (30) in the horizontal plane (XY).

9. The apparatus for generating a filling pattern for filling a product in a container according to any of claims 7 to 8, **characterized in that** the rotating means (40) comprise:
• a frame (41) on which there is arranged one or more containers (2), each of them vertically aligned with a filling head (30) and arranged on a rotary support base (42) coupled to a gear train (43); and
• a rotation mechanism (44) meshing with the gear train (43) to transmit a controlled rotational movement to the support base (42).

10. The apparatus for generating a filling pattern for filling a product in a container according to claim 9, **characterized in that** the vertical displacement means (50) comprise:
• at least one extendable bar (51) parallel to the vertical axis (Z) with an upper end (52) attached to the frame (41);
• a vertical displacement mechanism (53) elongating or shortening the length of the extendable bar (51) to transmit a controlled movement of the container (2) in the direction of the vertical axis (Z).

11. The apparatus for generating a filling pattern for filling a product in a container according to any of claims 7 to 10, **characterized in that** the horizontal displacement means (60) comprise:
• a first screw (61) parallel to the Y axis of the horizontal plane (XY);
• a first transfer carriage (62) traversed by the first screw (61) which can be moved along same, the movement of which is transmitted to the filling head (30); and
• a first horizontal displacement mechanism (63) configured for rotating the first screw (61) and for producing a controlled movement of the transfer carriage (62) along said first screw (61).

12. The apparatus for generating a filling pattern for filling a product in a container according to claim 11, **characterized in that** the first transfer carriage (62) comprises an attachment bar (70) which allows the fixing thereof to one or more filling heads (30).

13. The apparatus for generating a filling pattern for filling a product in a container according to any of claims 7 to 12, **characterized in that** the horizontal displacement means (60) comprise:
• a second screw (64) parallel to the X axis of the horizontal plane (XY);
• a second transfer carriage (65) traversed by the second screw (64) which can be moved along same, the movement of which is transmitted to the filling head (30); and
• a second horizontal displacement mechanism (66) configured for rotating the second screw (64) and for producing a controlled movement of the second transfer carriage (65) along said second screw (64).

14. The apparatus for generating a filling pattern for filling a product in a container according to claim 13, **characterized in that** the horizontal displacement means (60) additionally comprise:
• a third screw (67) horizontally parallel to the second screw (64);
• a third transfer carriage (68) traversed by the third screw (67) which can be moved along same, the movement of which is transmitted to the filling head (30); and
• a third horizontal displacement mechanism (69) configured for rotating the third screw (67) and for producing the controlled movement of the third carriage (68), in a synchronized manner with the movement of the second carriage (65).

15. The apparatus for generating a filling pattern for filling a product in a container according to claims 11, 13 and 14, **characterized in that** the first screw (61) is attached to the second (65) and third transfer carriage (67) to be moved therewith.

## Patentansprüche

1. Verfahren zum Erzeugen eines Füllmusters zum Füllen eines Produkts in einem Behälter, wobei das besagte Produkt (1) durch eine Vielzahl von Zusammensetzungen (10, 20), die separat zugeführt werden, gebildet wird, wobei das Verfahren folgende Schritte umfasst:
• Regeln der Strömungsrate jeder Zusammensetzung (10, 20);
• Verteilen jeder Zusammensetzung (10, 20) bei einer vorgegebenen Strömungsrate hin zu einem Füllkopf (30), der eine Austrittsdüse (31) besitzt, die zum Dosieren jeder Zusammensetzung (10, 20) ausgebildet ist, wobei die besagte Düse (31) zur Öffnung des Behälters (2) hin ausgerichtet ist;
• Drehen des Behälters (2) um eine vertikale Achse (Z) davon; und
• Variieren der relativen Distanz zwischen dem Behälter (2) und der Düse (31) in der Richtung der vertikalen Achse (Z);
wobei das besagte Verfahren **dadurch gekennzeichnet ist, dass** es zusätzlich die Schritte umfasst:
• Variieren der relativen Distanz zwischen dem Behälter (2) und der Austrittsdüse (31) in einer horizontalen Ebene (XY) senkrecht zu der vertikalen Achse (Z); und
• Füllen des Behälters (2), Steuern der Strömungsrate jeder Zusammensetzung (10, 20), des Winkels der Drehung des Behälters (2) und der relativen vertikalen und horizontalen Distanzen zwischen dem Behälter (2) und der Düse (31), zum Erzeugen eines Füllmusters (100), um das Produkt (1) in dem Behälter (2) zu füllen.

2. Verfahren zum Erzeugen eines Füllmusters zum Füllen eines Produkts in einem Behälter nach Anspruch 1, **dadurch gekennzeichnet, dass** die Variation der relativen vertikalen Distanz zwischen dem Behälter (2) und der Austrittsdüse (31) den Schritt umfasst:
• Bewegen des Behälters (2) in Richtung der vertikalen Achse (Z).

3. Verfahren zum Erzeugen eines Füllmusters zum Füllen eines Produkts in einem Behälter nach einem der Ansprüche 1 bis 2, **dadurch gekennzeichnet, dass** die Variation der relativen horizontalen Distanz zwischen dem Behälter (2) und der Austrittsdüse (31) den Schritt umfasst:
• Bewegen des Abfüllkopfes (30) in der horizontalen Ebene (XY).

4. Verfahren zum Erzeugen eines Füllmusters zum Füllen eines Produkts in einem Behälter nach einem der Ansprüche 1 bis 2, **dadurch gekennzeichnet, dass** die Variation der relativen horizontalen Distanz zwischen dem Behälter (2) und der Austrittsdüse (31) den Schritt umfasst:
• Bewegen des Behälters (2) in der horizontalen Ebene (XY).

5. Verfahren zum Erzeugen eines Füllmusters zum Füllen eines Produkts in einem Behälter nach einem der Ansprüche 1 bis 4, **dadurch gekennzeichnet, dass** das Füllmuster (100) mit Spiralform mit variablem Durchmesser (101) eine erste Zusammensetzung (10) eingebettet in eine zweite Zusammensetzung (20) aufweist.

6. Verfahren zum Erzeugen eines Füllmusters zum Füllen eines Produkts in einem Behälter nach einem der Ansprüche 1 bis 5, **dadurch gekennzeichnet, dass** das Füllmuster (100), in mindestens zwei Teile (102, 103) unterteilt, eine erste Zusammensetzung (10), eingebettet in eine zweite Zusammensetzung (20) aufweist.

7. Vorrichtung zum Erzeugen eines Füllmusters zum Füllen eines Produkts in einem Behälter, wobei das besagte Produkt (1) durch eine Vielzahl von separat zugeführten Zusammensetzungen (10, 20) gebildet wird, wobei die besagte Vorrichtung Folgendes umfasst:
• eine Messeinheit (11, 12) zum Messen jeder Zusammensetzung (10, 20), ausgebildet zum Regulieren der Strömungsrate derselben;
• einen Abfüllkopf (30) mit einer Ausgangsdüse (31), die für die Dosierung jeder Zusammensetzung (10, 20) ausgebildet ist, und die hin zur Öffnung eines Behälters (2) ausgerichtet ist;
• eine Verteilerleitung (21, 22) ausgebildet zum Verteilen jeder Zusammensetzung (10, 20) bei einer gegebenen Strömungsrate von der Messeinheit (11, 12), zum Füllkopf (30);
• Dreheinrichtung (40) die zum Drehen des Behälters (2) um eine vertikale Achse (Z) davon ausgebildet ist; und
• vertikale Verschiebeeinrichtung (50) die zum Variieren der relativen Distanz zwischen dem Behälter (2) und der Düse (31) in der Richtung der vertikalen Achse (Z) ausgebildet ist;
wobei die Vorrichtung **dadurch gekennzeichnet ist, dass** sie zusätzlich Folgendes umfasst:
• horizontale Verschiebeeinrichtung (60) die zum Variieren der relativen Distanz zwischen dem Behälter (2) und der Austrittsdüse (31) in einer horizontalen Ebene (XY), die senkrecht zu der vertikalen Achse (Z) ausgebildet ist; und
• Steuerungsmittel zum Steuern des Füllens des Behälters (2) ausgebildet zum Steuern der Strömungsrate jeder Zusammensetzung (10, 20), des Drehwinkels des Behälters (2) und der Variation der relativen vertikalen und horizontalen Distanzen zwischen dem Behälter (2) und der Düse (31), um ein Füllmuster (100) zum Füllen des Produkts (1) in dem Behälter (2) zu erzeugen.

8. Vorrichtung zum Erzeugen eines Füllmusters zum Füllen eines Produkts in einem Behälter nach Anspruch 7, **dadurch gekennzeichnet, dass** die Verteilerleitung (21, 22) flexible Verbindungsanschlüsse, die die Messeinheit (11, 12) und den Füllkopf (30) verbinden, aufweist, um ein Bewegen des Abfüllkopfes (30) in der horizontalen Ebene (XY) zu erlauben.

9. Vorrichtung zum Erzeugen eines Füllmusters zum Füllen eines Produkts in einem Behälter nach einem der Ansprüche 7 bis 8, **dadurch gekennzeichnet, dass** die Dreheinrichtung (40) Folgendes umfasst:
• einen Rahmen (41), auf dem ein oder mehrere Behälter (2) angeordnet sind, von denen jeder vertikal mit einem Abfüllkopf (30) ausgerichtet ist und auf einer Rotationsträgerbasis (42) an ein Getriebe (43) gekoppelt ist; und
• einen Drehmechanismus (44), der mit dem Getriebe (43) ineinandergreift, um eine kontrollierte Drehbewegung zur Trägerbasis (42) zu übertragen.

10. Vorrichtung zum Erzeugen eines Füllmusters zum Füllen eines Produkts in einem Behälter nach Anspruch 9, **dadurch gekennzeichnet, dass** die vertikale Verschiebeeinrichtung (50) Folgendes umfasst:
• mindestens eine ausfahrbare Stange (51) parallel zu der vertikalen Achse (Z) mit einem oberen Ende (52) am Rahmen (41) befestigt;
• eine Vertikalverschiebungseinrichtung (53), die die Länge der ausfahrbaren Stange (51) verlängert oder verkürzt, um eine kontrollierte Bewegung des Behälters (2) in Richtung der vertikalen Achse (Z) zu übertragen.

11. Vorrichtung zum Erzeugen eines Füllmusters zum Füllen eines Produkts in einem Behälter nach einem der Ansprüche 7 bis 10, **dadurch gekennzeichnet, dass** die horizontale Verschiebeeinrichtung (60) Folgendes umfasst:
• eine erste Schraube (61) parallel zur Y-Achse der horizontalen Ebene (XY);
• einen ersten Transferschlitten (62), der von der ersten Schraube (61), die entlang desselben bewegt werden kann, durchlaufen wird, deren Bewegung zum Füllkopf (30) übertragen wird; und
• ein erster horizontaler Verschiebemechanismus (63) ausgebildet zum Drehen der ersten Schraube (61) und zum Erzeugen einer gesteuerten Bewegung des Transferschlittens (62) entlang der genannten ersten Schraube (61).

12. Vorrichtung zum Erzeugen eines Füllmusters zum Füllen eines Produkts in einem Behälter nach Anspruch 11, **dadurch gekennzeichnet, dass** der erste Transferschlitten (62) eine Befestigungsleiste (70) aufweist, die die Befestigung von einer oder mehreren Füllstationen (30) ermöglicht.

13. Vorrichtung zum Erzeugen eines Füllmusters zum Füllen eines Produkts in einem Behälter nach einem der Ansprüche 7 bis 12, **dadurch gekennzeichnet, dass** die horizontale Verschiebeeinrichtung (60) Folgendes umfasst:
• eine zweite Schraube (64) parallel zu der X-Achse der horizontalen Ebene (XY);
• einen zweiten Transferschlitten (65) der von der zweiten Schraube (64), die entlang desselben bewegt werden kann, durchlaufen wird, deren Bewegung zum Füllkopf (30) übertragen wird; und
• einen zweiten horizontalen Verschiebemechanismus (66) ausgebildet zum Drehen der zweiten Schraube (64) und zum Erzeugen einer gesteuerten Bewegung des zweiten Transferschlittens (65) entlang der zweiten Schraube (64).

14. Vorrichtung zum Erzeugen eines Füllmusters zum Füllen eines Produkts in einem Behälter nach Anspruch 13, **dadurch gekennzeichnet, dass** die horizontale Verschiebeeinrichtung (60) zusätzlich Folgendes umfasst:
• eine dritte Schraube (67), horizontal parallel zu der zweiten Schraube (64);
• einen dritten Transferschlitten (68), der von der dritten Schraube (67), die entlang desselben bewegt werden kann, durchlaufen wird, deren Bewegung zum Füllkopf (30) übertragen wird; und
• einen dritten Horizontalbewegungsmechanismus (69) ausgebildet zum Drehen der dritten Schraube (67) und zur Erzeugung der kontrollierten Bewegung des dritten Schlittens (68), in einer synchronisierten Weise mit der Bewegung des zweiten Schlittens (65).

15. Vorrichtung zum Erzeugen eines Füllmusters zum Füllen eines Produkts in einem Behälter nach den Ansprüchen 11, 13 und 14, **dadurch gekennzeichnet, dass** die erste Schraube (61) an dem zweiten (65) und dritten Transferschlitten (67) angebracht ist, um damit bewegt zu werden.

## Revendications

1. Procédé pour créer un schéma de remplissage pour remplir un produit dans un container, ledit produit (1) est formé d'une pluralité de compositions (10, 20) fournies séparément, dans lequel ledit procédé comprend les étapes de :
• régulation du débit de chaque composition (10, 20) ;
• distribution de chaque composition (10, 20) à un débit donné vers une tête de remplissage (30) ayant une buse de sortie (31) qui est configurée pour mesurer chaque composition (10, 20), ladite buse (31) est orientée vers la bouche du container (2) ;
• rotation du container (2) sur un axe vertical (Z) de celui-ci ; et
• variation de la distance relative entre le container (2) et la buse (31) dans la direction de l'axe verticale (Z) ;
ledit procédé **caractérisé en ce qu'**il comprend en outre les étapes de :
• variation de la distance relative entre le container (2) et la buse de sortie (31) sur un plan horizontal (XY) perpendiculaire à l'axe vertical (Z) ; et
• remplissage du container (2), en contrôlant le débit de chaque composition (10, 20), l'angle de rotation du container (2) et les distances verticales et horizontales relatives entre le container (2) et la buse (31), pour créer un schéma de remplissage (100) pour remplir le produit (1) dans le container (2).

2. Le procédé pour créer un schéma de remplissage pour remplir un produit dans un container selon la revendication 1, **caractérisé en ce que** la variation de la distance verticale relative entre le container (2) et la buse de sortie (31) comprend l'étape de :
• déplacement du container (2) dans la direction de l'axe vertical (Z).

3. Le procédé pour créer un schéma de remplissage pour remplir un produit dans un container selon l'une quelconque des revendications 1 à 2, **caractérisé en ce que** la variation de la distance horizontale relative entre le container (2) et la buse de sortie (31) comprend les étapes de :
• déplacement de la tête de remplissage (30) sur un plan horizontal (XY).

4. Le procédé pour créer un schéma de remplissage pour remplir un produit dans un container selon l'une quelconque des revendications 1 à 2, **caractérisé en ce que** la variation de la distance horizontale relative entre le container (2) et la buse de sortie (31) comprend l'étape de :
• déplacement du container (2) sur un plan horizontal (XY).

5. Le procédé pour créer un schéma de remplissage pour remplir un produit dans un container selon l'une quelconque des revendications 1 à 4, **caractérisé en ce que** le schéma de remplissage (100) avec une forme spirale de diamètre variable (101) a une première composition (10) intégrée dans une deuxième composition (20).

6. Le procédé pour créer un schéma de remplissage pour remplir un produit dans un container selon l'une quelconque des revendications 1 à 5, **caractérisé en ce que** le schéma de remplissage (100) divisé en au moins deux parties (102, 103) a une première composition (10) intégrée dans une seconde composition (20).

7. Appareil pour créer un schéma de remplissage pour remplir un produit dans un container, ledit produit (1) est formé d'une pluralité de compositions (10, 20) fournies séparément, dans lequel ledit appareil comprend :
• une unité de mesure (11, 12) pour mesurer chaque composition (10, 20), configurée pour réguler le débit de celle-ci;
• une tête de remplissage (30) ayant une buse de sortie (31) qui est configurée pour mesurer chaque composition (10, 20) et qui est orientée vers la bouche d'un container (2) ;
• un tuyau de distribution (21, 22) configuré pour distribuer chaque composition (10, 20) à un débit donné de l'unité de mesure (11, 12) à la tête de remplissage (30) ;
• des moyens de rotation (40) configurés pour tourner le container (2) sur un axe vertical (Z) de celui-ci ; et
• des moyens de déplacement verticaux (50) configurés pour varier la distance relative entre le container (2) et la buse (31) dans la direction de l'axe vertical (Z) ;
le dit appareil **caractérisé en ce qu'**il comprend en outre :
• des moyens de déplacement horizontaux (60) configurés pour varier la distance relative entre le container (2) et la buse de sortie (31) sur un plan horizontal (XY) perpendiculaire à l'axe vertical (Z) ; et
• des moyens de contrôle pour contrôler le remplissage du container (2) configurés pour contrôler le débit de chaque composition (10, 20), l'angle de rotation du container (2) et les distances verticales et horizontales relatives entre le container (2) et la buse (31), pour créer un schéma de remplissage (100) pour remplir le produit (1) dans le container (2).

8. L'appareil pour créer un schéma de remplissage pour remplir un produit dans un container selon la revendication 7, **caractérisé en ce que** le tube de distribution (21, 22) comprend des connections flexibles connectant l'unité de mesure (11, 12) et la tête de remplissage (30) pour permettre à la tête de remplissage (30) de se déplacer sur un plan horizontal (XY).

9. L'appareil pour créer un schéma de remplissage pour remplir un produit dans un container selon l'une quelconque des revendications 7 à 8, **caractérisé en ce que** les moyens de rotation (40) comprennent :
• un châssis (41) sur lequel est disposé un ou plusieurs containers (2), chacun d'eux alignés verticalement avec une tête de remplissage (30) et disposés sur une base de support rotative (42) accouplée à un engrenage (43) ; et
• un mécanisme de rotation (44) s'engrenant avec l'engrenage (43) pour transmettre un mouvement rotationnel contrôlé à la base de support (42).

10. L'appareil pour créer un schéma de remplissage pour remplir un produit dans un container selon la revendication 9, **caractérisé en ce que** les moyens de déplacement verticaux (50) comprennent :
• au moins une barre extensible (51) parallèle à l'axe verticale (Z) avec une extrémité supérieure (52) reliée au châssis (41) ;
• un mécanisme de déplacement vertical (53) allongeant ou raccourcissant la longueur de la barre extensible (51) pour transmettre un mouvement contrôlé au container (2) dans la direction de l'axe vertical (Z).

11. L'appareil pour créer un schéma de remplissage pour remplir un produit dans un container selon l'une quelconque des revendications 7 à 10, **caractérisé en ce que** les moyens de déplacement horizontaux (60) comprennent :
• une première vis (61) parallèle à l'axe Y du plan horizontal (XY) ;
• un premier chariot de transfert (62) traversé par la première vis (61) qui peut être déplacé tout au long de celle-ci, dont le mouvement est transmis à la tête de remplissage (30) ; et
• un premier mécanisme de déplacement horizontal (63) configuré pour tourner la première vis (61) et pour produire un mouvement contrôlé du chariot de transfert (62) tout au long de ladite première vis (61).

12. L'appareil pour créer un schéma de remplissage pour remplir un produit dans un container selon la revendication 11, **caractérisé en ce que** le premier chariot de transfert (62) comprend une barre de liaison (70) qui permet la fixation de celui-ci sur une ou plusieurs têtes de remplissage (30).

13. L'appareil pour créer un schéma de remplissage pour remplir un produit dans un container selon l'une quelconque des revendications 7 à 12, **caractérisé en ce que** les moyens de déplacement horizontaux (60) comprennent :
• une deuxième vis (64) parallèle à l'axe X du plan horizontal (XY) ;
• un deuxième chariot de transfert (65) traversé par la deuxième vis (64) qui peut être déplacé tout au long de celle-ci, dont le mouvement est transmis à la tête de remplissage (30) ; et
• un deuxième mécanisme de déplacement horizontal (66) configuré pour tourner la deuxième vis (64) et pour produire un mouvement contrôlé du deuxième chariot de transfert (65) tout au long de ladite deuxième vis (64).

14. L'appareil pour créer un schéma de remplissage pour remplir un produit dans un container selon la revendication 13, **caractérisé en ce que** les moyens de déplacement horizontaux (60) comprennent en outre :
• une troisième vis (67) horizontalement parallèle à la deuxième vis (64)
• un troisième chariot de transfert (68) traversé par la troisième vis (67) qui peut être déplacé tout au long de celle-ci, dont le mouvement est transmis à la tête de remplissage (30) ; et
• un troisième mécanisme de déplacement horizontal (69) configuré pour tourner la troisième vis (67) et pour produire le mouvement contrôlé du troisième chariot (68), de manière synchronisée avec le mouvement du deuxième chariot (65).

15. L'appareil pour créer un schéma de remplissage pour remplir un produit dans un container selon l'une quelconque des revendications 11, 13 et 14, **caractérisé en ce que** la première vis (61) est reliée au deuxième (65) et au troisième chariot de transfert (67) pour qu'ils se déplacent sur celle-ci.
